# NEW EUROPEAN PATENT SPECIFICATION

(11) **EP 2 553 010 B2**
(45) Date of publication and mention of the opposition decision: **11.03.2020**
(45) Mention of the grant of the patent: 03.05.2017
(21) Application number: 11763409.7
(22) Date of filing: 31.03.2011
(51) Int. Cl.: C08K 5/55

(54) **INSULATION PRODUCTS HAVING A NON-AQUEOUS MOISTURIZER**
ISOLIERUNGSPRODUKTE MIT NICHTWÄSSRIGEM FEUCHTHALTEMITTEL
PRODUITS D'ISOLATION CONTENANT UN HUMIDIFIANT NON AQUEUX

(30) Priority: 31.03.2010 US 319571 P
(43) Date of publication of application: 06.02.2013
(73) Proprietor: Knauf Insulation GmbH, Shelbyville, IN 46176 (US)
(72) Inventor: APPLEY, Charles, Fitch, Cumberland, IN 46229 (US); MUELLER, Gert, New Palestine, IN 46163 (US); STILLABOWER, Scott, Lee, Franklin, IN 46131 (US)
(74) Representative: ARC-IP
(86) International application number: PCT/US2011/030654
(87) International publication number: WO 2011/123593

(56) References cited:
- EP-A1- 2 223 940
- WO-A1-02/096819
- WO-A1-03/106561
- WO-A1-2007/129202
- WO-A1-2009/006532
- WO-A1-2009/019235
- WO-A1-2011/019597
- WO-A2-2007/014236
- US-A- 4 347 271
- US-A1- 2009 324 915
- Laboratoires Sérobiologiques: "HYDRATYL® LS 8453", Brochure Brochure, XP055458785, Retrieved from the Internet: URL:http://www.bsibusiness.com/uploads/pro duct_ls/pdf/38_pdf.pdf [retrieved on 2018-03-13]
- Jean-François Tranchant, Et Al: "Formulation des polymères naturels en cosmétique", Techniques de l'Ingénieur Techniques de l'Ingénieur, XP055458503, [retrieved on 2018-03-12]
- Dow Chemical Company: "Polyglycol P Series Polymers", Product Safety Assessment Product Safety Assessment, pages 1-6, XP055458506, [retrieved on 2018-03-12]
- Dow Chemical Company: "Lubrifiants SYNALOX", Brochure Brochure, XP055458788, Retrieved from the Internet: URL:http://msdssearch.dow.com/PublishedLit eratureDOWCOM/dh_0043/0901b8038004394a.pdf ?filepath=polyglycols/pdfs/noreg/118-01550 .pdf&fromPage=GetDoc [retrieved on 2018-03-13]

## Description

### TECHNICAL FIELD

This disclosure relates to a method for preparing an uncured fiber insulation product and a binder formulation therefore including a non-aqueous moisturizer. In particular, a composition that includes loosely assembled fibers, a binder, and non-aqueous moisturizer is described.

### BACKGROUND

Fiber insulation products include fibers and a binder material. Binders are useful in fabricating insulation products because they are capable of consolidating non- or loosely-assembled matter. For example, binders enable two or more surfaces to become united. In particular, thermosetting binders may be used to produce insulation products. Thermosetting binders may be characterized by being transformed into insoluble and infusible materials by means of either heat or catalytic action. Examples of a thermosetting binder include a variety of phenol-aldehyde, urea-aldehyde, melamine-aldehyde, and other condensation-polymerization materials like furane and polyurethane resins. Binder compositions containing phenol-aldehyde, resorcinol-aldehyde, phenol/aldehyde/urea, phenol/melamine/aldehyde, and the like are used for the bonding of fibers, textiles, plastics, rubbers, and many other materials.

The glass and mineral wool industry has historically used a phenol formaldehyde (PF) binder to bind fibers. PF binders provide suitable properties to the final products; however, environmental considerations have motivated the development of alternative binders. One such alternative binder is a carbohydrate-based binder derived from reacting a carbohydrate and a multiprotic acid, for example, U.S. Published Application No. 2007/0027283 and Published PCT Application WO 2009/019235. Another alternative binder is the esterification products of reacting a polycarboxylic acid and a polyol, for example, U.S. Published Application No. 2005/0202224.

### SUMMARY

According to the present disclosure, a fiberglass insulation product is described comprising fibers and a binder. The fiberglass insulation product has properties that make it useful for a variety of applications; particularly, the fiber insulation product may be used to provide buildings, vehicles, or other structures with acoustic and/or thermal insulation.

In illustrative embodiments, a fiber insulation product includes a binder, a collection of fibers, and a non-aqueous moisturizer. The binder is disposed upon the collection of fibers and the non-aqueous moisturizer is in contact with fibers and/or binder. One aspect of the present disclosure is that the non-aqueous moisturizer provides advantages during the manufacturing process. Another aspect of the present disclosure is that the non-aqueous moisturizer improves the properties of the insulation product.

In the manufacture of fiber insulation products, a binder is disposed onto fibers, such as glass fibers. The binder sticks to the loosely assembled fibers and causes the fibers to stick to each other, to become consolidated into a single product. An uncured binder is made up of various chemicals in a substantially dehydrated state capable of reacting with each other to form a polymer. In this substantially dehydrated uncured state, the mixture can be used to promote adhesion between the loosely assembled fibers. However, the physical properties of the binder, such as strength, are enhanced through a curing step. Curing involves reacting the chemicals together to form a polymer. The polymer is strong and has many desirable physical properties. The properties of the binder in the cured state provide an insulation product, such as fiberglass insulation, with the properties which consumers are accustomed.

In the uncured form, the binder may have properties which make the manufacturing of insulation products more difficult. For example, an insulation product with uncured binder may adhere to the manufacturing equipment. In another example, the uncured binder may be overly sticky causing undesirable results due to the stickiness. The adhesion of the uncured insulation product to the manufacturing equipment may necessitate cleaning the build-up of product off of the manufacturing equipment. This clean-up may cause delay in the manufacturing process wasting time, money, and insulation product. The stickiness of the uncured binder insulation product can also have other undesirable effects. For example, packaged uncured fiberglass insulation product may stick to the packaging material. This may slow further manufacturing processes and waste uncured insulation product. While some stickiness may create manufacturing difficulties; in part, it is the stickiness of the binder that enables the binder to consolidate loosely assembled matter so effectively. Therefore, the stickiness of the binder should not be completely eliminated; rather, it should be controlled in the context of the manufacturing process. The present disclosure describes our discovery that a non-aqueous moisturizer can be used to control the binder's stickiness in relation to the manufacturing process while not impairing its utility as a binder.

Furthermore, it was discovered that uncured binders have a tendency to migrate during drying. After binder is applied to a collection of fibers, the binder may be subjected to a drying process. It was discovered that the uncured binder has a tendency to migrate towards the locations on the insulation product in which drying occurs most rapidly. For example, the uncured binder would migrate to the edge or surface of an uncured insulation product that was left at ambient conditions to dry. This migration of uncured binder on the insulation product is undesirable because it results in uneven binder distribution across the entirety of the insulation product. For example, it would be visually apparent upon the curing of an insulation product in which the uncured binder migrated during drying that the concentration of binder is higher near the surfaces and edges than in the adjacent regions. It was unexpectedly discovered that when non-aqueous moisturizer was used with the binder formulations described herein, migration of the binder on insulation products was substantially reduced.

### DETAILED DESCRIPTION

The present invention relates to a method of manufacturing an uncured insulation product as defined in claim 1. According to the present disclosure, a fiber insulation product is described which includes fibers and a binder. As used herein, the term "fiber," indicates heat-resistant fibers suitable for withstanding elevated temperatures. Examples of such fibers include, but are not limited to, mineral fibers, aramid fibers, ceramic fibers, metal fibers, carbon fibers, polyimide fibers, certain polyester fibers, rayon fibers, and glass fibers. Illustratively, such fibers are substantially unaffected by exposure to temperatures above about 120 °C. For any of the embodiments herein, the fibers are glass fibers.

In illustrative embodiments, an uncured fiber insulation product comprises an uncured binder composition, a collection of fibers, and a non-aqueous moisturizer. In one embodiment, the uncured binder composition is oriented as a layer at least partially encompassing the collection of fibers. In another embodiment, at least a portion of the non-aqueous moisturizer is oriented as an outer layer on an exterior surface of the layer of the uncured binder composition. In another embodiment, the non-aqueous moisturizer is distributed within the uncured binder composition and the outer layer according to a function which accounts for a moisture content of the uncured binder composition and the solubility of the non-aqueous moisturizer in the uncured binder composition. For example, the function may include an indirect relationship between the solubility of the non-aqueous moisturizer in the uncured binder composition and the moisture content of the uncured binder composition. According to this function, it may be observed that a particular non-aqueous moisturizer's solubility in the uncured binder composition increases as the moisture content decreases. In one embodiment, the non-aqueous moisturizer is at least partially water soluble.

In illustrative embodiments, a change in the moisture content upon subjecting an insulation product comprising an uncured binder composition and a non-aqueous moisturizer to a drying condition does not result in a significant migration of the uncured binder composition. In one embodiment, the drying condition does not significantly affect the distribution of uncured binder on the insulation product. A significant migration would be visually evident because the binder density differential would appear as a variation in the color of the insulation product. A significant effect on the distribution of uncured binder would be evidenced by failure of quality control measures routinely known to those in the art. In one embodiment, the moisture content of the uncured binder composition is about 1% to about 15% based on total weight of the insulation product. In another embodiment, the moisture content of the uncured binder composition is about 2% to about 7% based on total weight of the insulation product. In another embodiment, the solubility of the non-aqueous moisturizer in the uncured binder composition varies in accordance to a function relating the concentration and identity of the non-aqueous moisturizer to the composition of the uncured binder. In one embodiment, the concentration of non-aqueous moisturizer is in a range from about 0.5 to about 10% by weight based on a total dry weight of the uncured binder composition.

In illustrative embodiments, the non-aqueous moisturizer comprises a polyoxyalkylene glycol or a polypropylene glycol and the uncured binder composition comprises a carbohydrate and an ammonium salt of a multiprotic acid. In one embodiment, the ammonium salt of the multiprotic acid comprises ammonium citrate, ammonium phosphate, diammonium phosphate, ammonium sulfate, or mixtures thereof. In another embodiment, the carbohydrate comprises dextrose, xylose, fructose, sucrose, dihydroxyacetone, or mixtures thereof. In another embodiment, the fiber insulation product further comprises a silane. In one embodiment, the silane is concentrated at an interface between the uncured binder composition and the collection of glass fibers.

The uncured insulation product obtained from the method of manufacturing of claim 1 may be sold to another party for use in further manufacturing processes. This type of product is referred to as "ship-out uncured." In producing and selling this type of product, it is packaged in suitable containers or bags. For example, one suitable packaging material is a sealed polyethylene bag. In one aspect, it is undesirable for the uncured insulation product to adhere to the suitable packaging material. In yet other embodiments, an uncured insulation product may be packaged for preservation until it may be used in further manufacturing. As used herein, preservation of the uncured insulation product includes maintaining the properties of the uncured insulation in an unchanged state from the time of manufacture until a later time of further manufacturing. The time period in which the uncured insulation product can be preserved in a suitable packaging material is the "shelf-life" of the uncured insulation product. One aspect of the present disclosure is that uncured insulation products including a non-aqueous moisturizer, as described herein, have extended shelf-lives compared to comparable uncured insulation products lacking a non-aqueous moisturizer.

In illustrative embodiments, a packaged uncured fiber insulation product comprises an uncured binder composition, a collection of fibers, and a non-aqueous moisturizer, wherein (i) the uncured binder composition is in contact with the collection of fibers consolidating the collection of fibers, (ii) the non-aqueous moisturizer is in contact with the uncured binder composition, (iii) the uncured binder composition in contact with the collection of fibers is packaged in a suitable packaging material, and (iv) the non-aqueous moisturizer provides a lower adhesive force between the uncured binder composition and the suitable packaging material compared to a comparable product without the non-aqueous moisturizer. In one embodiment, the lower adhesive force between the uncured binder composition and the suitable packaging material is a function of an amount of non-aqueous moisturizer. For example, the amount of non-aqueous moisturizer may be in a range from about 0.5 to about 10% by weight based on a total dry weight of the uncured binder composition. In another embodiment, the lower adhesive force between the uncured binder composition and the suitable packaging material is a function of an amount of moisture in the uncured binder composition. For example, the amount of moisture in the uncured binder composition may be in a range from about 1 to about 15% by weight based on a total weight of the insulation product. In yet another embodiment, the suitable packaging material may be capable of maintaining the amount of moisture in the uncured binder composition to within about 20% of an original moisture level for a period of one week at an ambient temperature and an ambient pressure.

In illustrative embodiments, the packaged uncured fiber insulation product comprises from about 3 to about 40% by weight of the uncured binder composition based on weight of the packaged uncured fiber insulation product without considering the weight of the suitable packaging material. In one embodiment, the packaged uncured fiber insulation product comprises from about 0.5 to about 10% by weight of the non-aqueous moisturizer based on total dry weight of the uncured binder composition. In another embodiment, the packaged uncured fiber insulation product comprises from about 50 to about 97% by weight fibers based on weight of the packaged uncured fiber insulation product without considering the weight of the suitable packaging material.

In one aspect, the non-aqueous moisturizer of the present disclosure was selected and implemented according to the unique properties and requirements of the recently discovered environmentally friendly binder formulations. For example, the non-aqueous moisturizer is described for use within the binder formulations described in U.S. Patent No. 7,655,711, U.S. Published Patent Application 2007/0123680, and PCT published application WO 2009/019235. So that the scope of the present application may be fully appreciated, these binder systems will be described herein. While described as distinct components, one aspect of the present disclosure is that the non-aqueous moisturizer may be incorporated into the binder solution. Furthermore, the non-aqueous moisturizer may participate in reactions with the binder chemical components to be covalently incorporated into the cured binder composition. The extent to which this incorporation occurs is dependent on the nature of the non-aqueous moisturizer, the binder composition, and the curing conditions.

As used herein, the term binder solution is the solution of chemicals which can be substantially dehydrated to form the uncured binder. As used herein, the composition of the uncured binder is referred to as the uncured binder composition. As used herein, the term uncured binder is the substantially dehydrated mixture of chemicals which can be cured to form the cured binder. As used herein, substantially dehydrated means that the moisture content of the uncured binder is between about 5 and about 65% water by weight of total binder (without regard to the weight of the bound matter). Furthermore, substantially dehydrated includes the concept that the moisture content of the uncured binder is between about 10 and about 35% water by weight. In practice, the uncured binder may be a white, off white, ochre to brownish sticky substance that is, at least partially, water soluble. As used herein, the term cured binder describes a thermoset polymer. The cured binder may have a characteristic brown to black color. As a thermoset polymer, the cured binder is substantially insoluble. For example, the thermoset binder is predominantly insoluble in water. As described herein, the uncured binder provides sufficient binding capacity to consolidate fibers; however, the cured binder imparts the robust, long-lasting durability and physical properties commonly associated with fiber insulation products.

The term "cured" indicates that the binder has been exposed to conditions so as to initiate a chemical change in the chemicals that make up the uncured binder composition. For example, curing may include the generation of polymeric materials from the corresponding monomeric materials. In addition, a cured binder may exhibit an increase in adhesion between the fibers as compared to an uncured binder. Curing can be initiated by, for example, heat, electromagnetic radiation, or electron beams.

The uncured, formaldehyde-free, thermally-curable, alkaline, aqueous binder composition can be used to fabricate a number of different materials. In particular, these binders can be used to produce or promote cohesion in non- or loosely-assembled matter by placing the binder in contact with the matter to be bound. Any number of well known techniques can be employed to place the aqueous binder in contact with the material to be bound. For example, the aqueous binder can be sprayed on (for example during the binding glass fibers) or applied via a roll-coat apparatus.

In illustrative embodiments, the cured binder comprises a reaction product of a carbohydrate and an acid precursor. In one embodiment, the cured binder comprises a reaction product of a carbohydrate and an inorganic acid precursor in the presence of ammonia. In another embodiment, the binder comprises a reaction product of a carbohydrate, ammonia, and an organic acid precursor. Exemplary inorganic acid precursors include sulfates, phosphates and nitrates. Exemplary organic acid precursors include polycarboxylic acids such as citric acid, maleic acid, tartaric acid, malic acid, or succinic acid. In one embodiment, the amine base may be substantially volatile or substantially non-volatile under conditions sufficient to promote formation of the thermoset binder during thermal curing. Illustratively, the amine base may be a substantially volatile base, such as, ammonia, ethylamine, diethylamine, dimethylamine, and ethylpropylamine. Alternatively, the amine base may be a substantially non-volatile base, for example, aniline, 1-naphthylamine, 2-naphthylamine, and *para*-aminophenol.

In illustrative embodiments, an uncured binder includes substantially dehydrated uncured binder precursors. For example, the uncured binder may include ammonium salts of the organic or inorganic acids. The uncured binder may also include substantially dehydrated carbohydrate compound, for example, dextrose. In one embodiment, the carbohydrate may be in the form of a hydrate. For example, dextrose may be in the form of a dextrose monohydrate. In one embodiment, the uncured binder may include a substantially dehydrated mixture of an ammonium salt of a multiprotic acid, a carbohydrate, and a non-aqueous moisturizer. In one embodiment, the uncured binder composition comprises a substantially dehydrated uncured mixture of dextrose and diammonium phosphate. In another embodiment, the uncured binder composition comprises a substantially dehydrated uncured mixture of dextrose and diammonium sulfate. In yet another embodiment, the uncured binder composition comprises a substantially dehydrated uncured mixture of dextrose and triammonium citrate. In one embodiment, the uncured binder composition may include low molecular weight adducts of the chemical components described herein.

In one embodiment, the ammonium salt of a multiprotic acid may be ammonium sulfate. In another embodiment, the ammonium salt of a multiprotic acid may be ammonium phosphate. For example, the ammonium salt of a multiprotic acid may be monoammonium phosphate, diammonium phosphate, triammonium phosphate, or an ammonium hydrogen phosphate. In one embodiment, the ammonium salt of the multiprotic acid may comprise between about 3 and about 25% of the dry weight of the uncured binder solution. In another embodiment, the ammonium salt of the multiprotic acid may comprise between about 5 and about 18% of the dry weight of the uncured binder solution. In another embodiment, the ammonium salt of the multiprotic acid may comprise between about 6 and about 16% of the dry weight of the uncured binder solution.

In illustrative embodiments, the carbohydrate may comprise a monosaccharide. For example, the carbohydrate may comprise a monosaccharide in its aldose or ketose form. In one embodiment, the carbohydrate comprises a sugar. In another embodiment, the carbohydrate comprises a reducing sugar or a reactant that yields a reducing sugar *in situ* under thermal curing conditions. For example, the carbohydrate may comprise glucose (*e.g*., dextrose). The term reducing sugar is intended to indicate a sugar having a free aldehyde or ketone group in its ring or chain form.

The binder solution may further include free ammonia or excess ammonia. In one embodiment, the binder solution may have a neutral or alkaline pH. In another embodiment, an alkaline pH may be generated by an excess of alkaline groups compared with acid groups present in the binder solution. For example, the alkalinity may be due partially or substantially to the presence of ammonia in the solution.

Binders which comprise or consist essentially of the components described herein may include other additives, for example, additives selected from: particulate silica, mineral oils, coupling agents, silicones, surfactants, hydrophilic additives, hydrophobic additives, waxes and substances useful for controlling the pH (*e.g*., ammonium hydroxide). A silicone additive may be, for example, a silicone oil or a silicone oil emulsion which is compatible with the binder. In one embodiment, the binder solution includes a silicone additive, wherein the silicone additive is at least partially phase separated from the uncured binder solution. In one embodiment the silicone additive is insoluble in the uncured binder composition and further facilitates a homogeneous drying process of the uncured binder composition. In one embodiment, a mixture of different silicone containing compounds is used. In another embodiment, the silicone content of the binder composition may be in the range of about 0.05% to about 10% by weight based on the binder solids. In another embodiment, the silicone content in the binder composition may be in the range of about 0.5 to about 5% based on the binder solids. In another embodiment, the binder includes a water insoluble solid selected from a group comprising silicates and silicon dioxide. In yet another embodiment, the insoluble solid content of the binder solution is in the range of about 0.1 to 10% based on total dry binder solids.

In one embodiment, a commercially available silane may be included in the binder solution. In one embodiment, a silane may be added to the binder system in order to impart moisture resistance to the fiber insulation product. The silane is, for example, a functionalized alkoxy silane, such as γ-aminopropyltriethoxysilane. In another embodiment, the silane content of the binder composition may be in the range of about 0.05 to about 3% by weight based on the binder solids. In another embodiment, the silane content in the binder composition may be in the range of about 0.2 to about 0.4% by weight based on the binder solids.

In illustrative embodiments, a fiber insulation product according to the present disclosure provides less adhesion to product processing equipment, such as conveyor belts, compression rolls, and chopper blades than a comparable product without the non-aqueous moisturizer. In further illustrative embodiments, a fiber insulation product manufactured in according to the present disclosure significantly reduces migration of the uncured binder in the product. In one aspect, the reduction of migration increases the shelf-life of an uncured insulation product and provides an insulation product having improved binder distribution. In another aspect, a fiber insulation product according to the present disclosure provides improved processing characteristics and machinability.

In illustrative embodiments, the non-aqueous moisturizer may include one or more polyethers. For example, the non-aqueous moisturizer may include one or more ethylene oxide or propylene oxide condensates having straight and/or branched chain alkyl and alkaryl groups. In one embodiment, the non-aqueous moisturizer includes a polyethylene glycol, a polypropylene glycol ether, a thioether, a polyoxyalkylene glycol (*e.g.*, Jeffox TP400®), a dipropylene glycol, and/or a polypropylene glycol (*e.g.*, Pluriol P425® or Pluriol 2000®). In one embodiment, the non-aqueous moisturizer comprises a polyoxyalkylene glycol or a polypropylene glycol. In one embodiment, the non-aqueous moisturizer comprises a polypropylene glycol. In another embodiment, the non-aqueous moisturizer includes a compound based on a polyhydroxy compound (*e.g*., a partially or fully esterified polyhydroxy compound). In another embodiment, the non-aqueous moisturizer includes a polyhydroxy compound based on glycerine, propylene glycol, ethylene glycol, a glycerine acetate, a sorbitol, a xylitol or a maltitol. In one embodiment, the non-aqueous moisturizer comprises sorbitol.

In another embodiment, the non-aqueous moisturizer includes other compounds having multiple hydroxyl groups based on tetrahydrofuran, a caprolactone, and/or one or more alkylphenoxypoly(ethyleneoxy)ethanols having alkyl groups containing from about 7 to about 18 carbon atoms and having from about 4 to about 240 ethyleneoxy units. For example, the non-aqueous moisturizer may include a heptylphenoxypoly(ethyleneoxy)ethanol and/or a nonylphenoxypoly(ethyleneoxy)ethanol. In another embodiment, the non-aqueous moisturizer includes a polyoxyalkylene derivative of hexitol such as a sorbitan, sorbide, mannitan, and/or a mannide. In yet another embodiment, the non-aqueous moisturizer may include a partial long-chain fatty acids ester, such as a polyoxyalkylene derivative of sorbitan monolaurate, sorbitan monopalmitate, sorbitan monostearate, sorbitan tristearate, sorbitan monooleate, and/or sorbitan trioleate.

In illustrative embodiments, the non-aqueous moisturizer includes a condensate of ethylene oxide with a hydrophobic base, the base being formed by condensing propylene oxide with propylene glycol. In one embodiment, the non-aqueous moisturizer includes a sulfur containing condensate, such as those prepared by condensing ethylene oxide with a higher alkyl mercaptan (*e.g*., nonyl, dodecyl, tetradecyl mercaptan, or alkylthiophenols having about 6 to about 15 carbon atoms in the alkyl group). In another embodiment, the non-aqueous moisturizer includes an ethylene oxide derivative of a long-chain carboxylic acid, such as lauric, myristic, palmitic, or oleic acids. In yet another embodiment, the non-aqueous moisturizer includes an ethylene oxide derivative of a long-chain alcohol such as octyl, decyl, lauryl, or cetyl alcohols. In another embodiment, the non-aqueous moisturizer includes an ethylene oxide/tetrahydrofuran copolymer or an ethylene oxide/propylene oxide copolymer.

It was discovered that the uncured fiber insulation products without a non-aqueous moisturizer may exhibit stickiness in the manufacturing process which resulted in the build-up of product on the manufacturing equipment. The build-up was found to be at least partially dependent on the moisture content of the uncured binder. It was determined that the relationship between stickiness in the manufacture process, measured as observed build-up, was directly, albeit not necessarily proportional, related to the water content. For example, it was observed that the higher water content uncured binder formulations typically exhibited build-up on the manufacturing equipment to a greater extent than the uncured binder having the lower water content. In one aspect, it was observed that the stickiness of the uncured binder composition was related to the water content, the higher water content typically exhibiting greater stickiness.

One aspect of the present disclosure is that the incorporation of a non-aqueous moisturizer reduces the build-up of uncured fiber insulation product on the manufacturing equipment. In one aspect, this reduction is more apparent for uncured insulation products having greater moisture contents. In another aspect, an uncured insulation product designed to have higher moisture contents may be benefited by higher concentrations of non-aqueous moisturizers. In yet another aspect, an uncured insulation product designed to have higher moisture contents may be benefited by a non-aqueous moisturizer having lower water solubility.

In one embodiment, a non-aqueous moisturizer is selected from derivatives of ethylene oxide and propylene oxide having relatively high flash points. In one aspect, the viscosity of the non-aqueous moisturizer will increase and the water solubility decrease with increasing molecular weight. As such, the molecular weight of the non-aqueous moisturizer will influence the appropriate implementation of a particular non-aqueous moisturizer with a given binder composition. In one embodiment, the molecular weight of the non-aqueous moisturizer is less than about 2000 grams/mole. In another embodiment, the molecular weight of the non-aqueous moisturizer is less than about 1000 grams/mole. In yet another embodiment, the molecular weight of the non-aqueous moisturizer is less than about 500 grams/mole. In another embodiment, the molecular weight of the non-aqueous moisturizer is greater than about 200 grams/mole. In another embodiment, the molecular weight of the non-aqueous moisturizer is greater than about 400 grams/mole.

In illustrative embodiments, the non-aqueous moisturizer is incorporated into the uncured fiber insulation product for improving the fiber insulation product characteristics. In one embodiment, the non-aqueous moisturizer is incorporated within the binder solution. In one aspect, addition of the non-aqueous moisturizer may provide the binder solution with a reduced surface tension. In another aspect, a reduced surface tension may provide an improvement in binder wetting and in the distribution of the binder onto a collection of fibers. In yet another aspect, the non-aqueous moisturizer may inhibit damage to the fibers during production providing a fiber insulation product having improved performance. In still another aspect, the non-aqueous moisturizer may enable production through a more environmentally friendly process.

The binder solutions described herein can be applied to glass fibers (*e.g.*, sprayed onto the mat or sprayed onto the fibers as they enter the forming region), during production of fiberglass insulation products. Once the binder solution is in contact with the glass fibers the residual heat from the glass fibers (note that the glass fibers are made from molten glass and thus contain residual heat) and the flow of air through and/or around the product will cause a portion of the water to evaporate from the binder solution. Removing the water leaves the remaining components of the binder on the fibers as a coating of viscous or semi-viscous high-solids mixture. This coating of viscous or semi-viscous high-solids mixture functions as a binder. At this point, the mat has not been cured. In other words, the uncured binder functions to bind the glass fibers in the mat.

Furthermore, it should be understood that the above described uncured binders can be cured. For example, the process of manufacturing a cured insulation product may include a subsequent step in which heat is applied as to cause a chemical reaction in the uncured binder composition. For example, in the case of making fiberglass insulation products, after the binder solution has been applied to the fibers and dehydrated, the uncured insulation product may be transferred to a curing oven. In the curing oven the uncured insulation product is heated (*e*.*g*., from about 300 °F to about 600 °F), causing the binder to cure. The cured binder is a formaldehyde-free, water-resistant thermoset binder that attaches the glass fibers of the insulation product together. Note that the drying and thermal curing may occur either sequentially, simultaneously, contemporaneously, or concurrently.

In illustrative embodiments, an uncured fiberglass insulation product comprises about 3 to about 40% of dry binder solids (total uncured solids by weight). In one embodiment, the uncured fiberglass insulation product comprises about 5 to about 25% of dry binder solids. In another embodiment, the uncured fiberglass insulation product comprises about 50 to about 97% glass fibers by weight. In illustrative embodiments, a cured fiberglass insulation product is disclosed comprising a collection of glass fibers maintained together by a substantially formaldehyde free binder characterized in that the material comprises more than about 500 mg/kg of a species selected from the group consisting of sulfates, phosphates, nitrates, and carboxylates. In one embodiment, the species selected from the group consisting of sulfates, phosphates, nitrates, and carboxylates is derived essentially from compounds comprising the uncured binder mixture.

In one embodiment, the step of volatilizing the binder solution includes increasing salinity of the binder solution in contact with the fibers and decreasing solubility of the non-aqueous moisturizer in the binder solution. In another embodiment, the step of volatizing water from the binder solution includes at least partially phase separating the non-aqueous moisturizer from an aqueous phase of the binder solution. In another embodiment, mixing comprises adding the following in no particular order: (1) an amount of the carbohydrate in a range of about 50 to about 85% by dry weight based on total weight of dry binder solids, (2) an amount of the ammonium salt of the multiprotic acid in a range of about 3 to about 25% by dry weight based on total weight of dry binder solids, (3) an amount of aqueous ammonia solution in a range of 0.1 to about 12% by dry weight based on total weight of dry binder solids, (4) an amount of the silane in a range of about 0.05 to about 10% by dry weight based on total weight of dry binder solids, and (5) an amount of the non-aqueous moisturizer in a range of about 0.5 to about 10% by weight based on total weight of dry binder solids; to an amount of water in a range of about 35 to about 98% by weight based on total weight of the binder solution.

In illustrative embodiments, the steps of contacting the fibers with the binder solution and contacting the fibers with the non-aqueous moisturizer occur substantially simultaneously. In one embodiment, the step of contacting the fibers with the binder solution occurs immediately prior to the step of contacting the fibers with the non-aqueous moisturizer. In yet another embodiment, the step of contacting the fibers with the binder solution and contacting the fibers with the non-aqueous moisturizer occurs as the fibers retain residual heat from a rotary fiberization process. In another embodiment, the step of volatilizing water from the binder solution to form the uncured binder composition includes reducing moisture in the uncured binder composition to about 1 to about 15% by weight based on total weight of the uncured insulation product.

In illustrative embodiments, the non-aqueous moisturizer can be incorporated into the binder by batch mixing with the binder solution. In other embodiments, the non-aqueous moisturizer can be added to the non-aqueous moisturizer by inline injection. In one aspect, inline injection may be preferable if the non-aqueous moisturizer is of limited solubility in the binder solution.

Referring now to Table 1, shown are the representative results of using two exemplary non-aqueous moisturizers with two representative binder compositions. The comparative examples are binders made according to Published PCT Application WO 2009/019235. Specifically, Comparative Example 1 includes dextrose, diammonium phosphate, and a silane. Comparative Example 2 includes dextrose, ammonium sulfate, and a silane. The silane is γ-aminopropyltriethoxysilane (e.g., Silquest^{™} A-1101 from Momentive Specialty Chemicals). Each comparative example is made without the addition of a non-aqueous moisturizer. Each example adds an amount of a non-aqueous moisturizer as identified in the table in amount described by weight percentage of the total uncured binder solids. The table further includes the observations noted for each example in terms of improving the characteristics of the uncured insulation product compared to the corresponding comparative example. The observation of significant adhesion represents an observation that uncured insulation product adhered to the process equipment (belts and compression rolls).

**Table 1**

| | Non-aqueous Moisturizer | Observation |
|---|---|---|
| Comparitive Example 1 | none | significant adhesion to belts and compression rolls |
| Example 1 | Pluriol P425® @ 3.8% | no significant adhesion |
| Example 2 | Jeffox TP400® @ 4.3% | no significant adhesion |
| Example 3 | Jeffox TP400® @ 10% | no significant adhesion |
| Comparitive Example 2 | none | significant adhesion to belts and compression rolls |
| Example 4 | Pluriol P425® @ 4.7% | no significant adhesion |

## Claims

1. A method of manufacturing an uncured insulation product comprising the following steps:
mixing a carbohydrate, an ammonium salt of a multiprotic acid, and a silane in an aqueous solution to form a binder solution,
contacting glass fibers with the binder solution,
contacting the glass fibers with a non-aqueous moisturizer,
volatilizing water from the binder solution to form an uncured binder composition in contact with the glass fibers, and
packaging the uncured insulation product comprising the uncured binder composition in contact with the glass fibers in suitable containers or bags for use in a further manufacturing process.

2. The method of claim 1, wherein the step of volatilizing water from the binder solution comprises:
increasing salinity of the binder solution in contact with the glass fibers and
decreasing solubility of the non-aqueous moisturizer in the binder solution.

3. The method of claim 2, wherein volatilizing water from the binder solution further comprises:
at least partially phase separating the non-aqueous moisturizer from an aqueous phase of the binder solution.

4. The method of any one of claims 1-3, wherein mixing comprises adding: an amount of the carbohydrate in a range of 50 to about 85% by dry weight based on total weight of dry binder solids,
an amount of the ammonium salt of the multiprotic acid in a range of 3 to about 25% by dry weight based on total weight of dry binder solids,
an amount of aqueous ammonia solution in a range of 0.1 to about 12% by dry weight based on total weight of dry binder solids,
an amount of the silane in a range of 0.05 to about 3% by dry weight based on total weight of dry binder solids, and
an amount of the non-aqueous moisturizer in a range of 0.5 to about 10% by weight based on total weight of dry binder solids;
to an amount of water in a range of 35 to about 98% by weight based on total weight of the binder solution.

5. The method of any one of claims 1-4, wherein the step of contacting the glass fibers with the binder solution and contacting the glass fibers with the non-aqueous moisturizer occur substantially simultaneously.

6. The method of any one of claims 1-4, wherein the step of contacting the glass fibers with the binder solution occurs immediately prior to the step of contacting the glass fibers with the non-aqueous moisturizer.

7. The method of any one of claims 1-6, wherein the step of contacting the glass fibers with the binder solution and contacting the glass fibers with the non-aqueous moisturizer occurs as the glass fibers retain residual heat from a rotary fiberization process.

8. The method of any one of claims 1-7, wherein the step of volatilizing water from the binder solution to form the uncured binder composition includes reducing moisture in the uncured binder composition to about 1 to about 15% by weight based on total weight of the uncured insulation product.

9. The method of any one of claims 1-8, wherein the non-aqueous moisturizer comprises polyethylene glycol, a polypropylene glycol ether, a thioether, a polyoxyalkylene glycol, a dipropylene glycol, and/or a polypropylene glycol.

10. The method of any one of claims 1-8, wherein the non-aqueous moisturizer comprises a polyoxyalkylene glycol or a polypropylene glycol.

11. The method of any one of claims 1-8, wherein the non-aqueous moisturizer comprises a partially or fully esterified polyhydroxy compound based on glycerine, propylene glycol, ethylene glycol, a glycerine acetate, a sorbitol, a xylitol or a maltitol.

## Patentansprüche

1. Verfahren der Herstellung eines ungehärteten Dämmungsprodukts, umfassend die folgenden Schritte:
Mischen eines Kohlenhydrates, eines Ammoniumsalzes einer mehrprotischen Säure und eines Silans in einer wässrigen Lösung, um eine Bindemittellösung zu bilden,
in Kontakt bringen von Glasfasern mit der Bindemittellösung,
in Kontakt bringen der Glasfasern mit einem nichtwässrigen Feuchthaltemittel
Verdampfen von Wasser aus der Bindemittellösung, um eine ungehärtete Bindemittelzusammensetzung in Kontakt mit den Glasfasern zu bilden, und
das Verpacken des ungehärteten Dämmungsprodukts mit der ungehärteten Bindemittelzusammensetzung in Kontakt mit den Glasfasern in adequaten Containern oder Taschen für die Benutzung in einem weiteren Herstellungsverfahren.

2. Verfahren nach Anspruch 1, wobei der Schritt des Verdampfens von Wasser aus der Bindemittellösung umfasst:
Erhöhen des Salzgehalts der Bindemittellösung in Kontakt mit den Glasfasern und
Erniedrigen der Löslichkeit des nichtwässrigen Feuchthaltemittels in der Bindemittellösung.

3. Verfahren nach Anspruch 2, wobei das Verdampfen von Wasser aus der Bindemittellösung weiter umfasst:
zumindest teilweises Phasentrennen des nichtwässrigen Feuchthaltemittels von einer wässrigen Phase der Bindemittellösung.

4. Verfahren nach einem der Ansprüche 1-3, wobei das Mischen das Zugeben:
einer Menge des Kohlenhydrats in einem Bereich von 50 bis ungefähr 85% nach Trockengewicht, bezogen auf das Gesamtgewicht von trockenen Bindemittellfeststoffen,
einer Menge des Ammoniumsalzes der mehrprotischen Säure in einem Bereich von 3 bis ungefähr 25% nach Trockengewicht, bezogen auf das Gesamtgewicht von trockenen Bindemittellfeststoffen,
einer Menge wässriger Ammoniaklösung in einem Bereich von 0,1 bis ungefähr 12% nach Trockengewicht, bezogen auf das Gesamtgewicht von trockenen Bindemittellfeststoffen,
einer Menge des Silans in einem Bereich von 0,05 bis ungefähr 3% nach Trockengewicht, bezogen auf das Gesamtgewicht von trockenen Bindemittellfeststoffen, und
einer Menge des nichtwässrigen Feuchthaltemittels in einem Bereich von 0,5 bis ungefähr 10% nach Gewicht, bezogen auf das Gesamtgewicht von trockenen Bindemittellfeststoffen;
zu einer Menge Wasser in einem Bereich von 35 bis ungefähr 98% nach Gewicht, bezogen auf das Gesamtgewicht der Bindemittellösung,
umfasst.

5. Verfahren nach einem der Ansprüche 1-4, wobei der Schritt des in Kontakt Bringens der Glasfasern mit der Bindemittellösung und des in Kontakt Bringens der Glasfasern mit dem nichtwässrigen Feuchthaltemittel im Wesentlichen gleichzeitig stattfinden.

6. Verfahren nach einem der Ansprüche 1-4, wobei der Schritt des in Kontakt Bringens der Glasfasern mit der Bindemittellösung unmittelbar vor dem Schritt des in Kontakt Bringens der Glasfasern mit dem nichtwässrigen Feuchthaltemittel stattfindet.

7. Verfahren nach einem der Ansprüche 1-6, wobei der Schritt des in Kontakt Bringens der Glasfasern mit der Bindemittellösung und des in Kontakt Bringens der Glasfasern mit dem nichtwässrigen Feuchthaltemittel stattfindet, während die Glasfasern noch Restwärme von einem Rotationsfaserbildungsprozess behalten.

8. Verfahren nach einem der Ansprüche 1-7, wobei der Schritt des Verdampfens von Wasser aus der Bindemittellösung, um die ungehärtete Bindemittelzusammensetzung zu bilden, das Reduzieren der Feuchtigkeit in der ungehärteten Bindemittelzusammensetzung auf ungefähr 1 bis ungefähr 15% nach Gewicht, bezogen auf das Gesamtgewicht des ungehärteten Dämmungsprodukts, beinhaltet.

9. Verfahren nach einem der Ansprüche 1-8, wobei das nichtwässrige Feuchthaltemittel Polyethylenglykol, einen Polypropylenglykolether, einen Thioether, ein Polyoxyalkylenglykol, ein Dipropylenglykol und/oder rein Polypropylenglykol umfasst.

10. Verfahren nach einem der Ansprüche 1-8, wobei das nichtwässrige Feuchthaltemittel ein Polyoxyalkylenglykol oder ein Polypropylenglykol umfasst.

11. Verfahren nach einem der Ansprüche 1-8, wobei das nichtwässrige Feuchthaltemittel eine teilweise oder vollständig veresterte Polyhydroxyverbindung, basierend auf Glycerin, Propylenglykol, Ethylenglykol, einem Glycerinacetat, einem Sorbitol, einem Xylitol oder einem Maltitol, umfasst.

## Revendications

1. Un procédé de fabrication d'un produit d'isolation non réticulé comprenant les étapes suivantes:
mélanger un glucide, un sel d'ammonium d'un acide multiprotique et un silane dans une solution aqueuse pour former une solution de liant,
mettre en contact des fibres de verre avec la solution de liant,
mettre en contact les fibres de verre avec un humidifiant non aqueux,
volatiliser l'eau de la solution de liant pour former une composition de liant non réticulée en contact avec les fibres de verre, et
empaqueter le produit d'isolation non réticulé comprenant la composition de liant non réticulée en contact avec les fibres de verre dans des récipients ou des sacs appropriés pour une utilisation dans un processus de fabrication ultérieur.

2. Le procédé selon la revendication 1, dans lequel l'étape de volatilisation de l'eau de la solution de liant comprend:
l'augmentation de la salinité de la solution de liant en contact avec les fibres de verre et
la diminution de la solubilité de l'humidifiant non aqueux dans la solution de liant.

3. Le procédé selon la revendication 2, dans lequel la volatilisation de l'eau de la solution de liant comprend en outre:
une séparation au moins partielle des phases de l'humidifiant non aqueux d'une phase aqueuse de la solution de liant.

4. Le procédé selon l'une quelconque des revendications 1-3, dans lequel le mélange comprend l'addition des suivants: une quantité de glucide allant de 50 à environ 85% en poids à sec, sur base du poids total des solides de liant sec,
une quantité du sel d'ammonium de l'acide multiprotique allant de 3 à environ 25% en poids à sec, sur base du poids total des solides de liant sec,
une quantité de solution d'ammoniaque allant de 0.1 à environ 12% en poids à sec, sur base du poids total des solides de liant sec,
une quantité du silane allant de 0.05 à environ 3% en poids à sec, sur base du poids total des solides de liant sec, et
une quantité de l'humidifiant non aqueux allant de 0.5 à environ 10% en poids à sec, sur base du poids total des solides de liant sec;
à une quantité d'eau allant de 35 à environ 98% en poids sur base du poids total de la solution de liant.

5. Le procédé selon l'une quelconque des revendications 1-4, dans lequel l'étape de mise en contact des fibres de verre avec la solution de liant et la mise en contact des fibres de verre avec l'humidifiant non aqueux se produisent de manière essentiellement simultanée.

6. Le procédé selon l'une quelconque des revendications 1-4, dans lequel l'étape de mise en contact des fibres de verre avec la solution de liant s'effectue immédiatement avant l'étape de mise en contact des fibres de verre avec l'humidifiant non aqueux.

7. Le procédé selon l'une quelconque des revendications 1-6, dans lequel l'étape de mise en contact des fibres de verre avec la solution de liant et la mise en contact des fibres de verre avec l'humidifiant non aqueux s'effectue pendant que les fibres de verre retiennent la chaleur résiduelle provenant du procédé de fibérisation par rotation.

8. Le procédé selon l'une quelconque des revendications 1-7, dans lequel l'étape de volatilisation de l'eau de la solution de liant pour former la composition de liant non réticulée comprend la réduction de l'humidité dans la composition de liant non réticulée à environ 1 jusqu'à environ 15% en poids, sur base du poids total du produit d'isolation non réticulé.

9. Le procédé selon l'une quelconque des revendications 1-8, dans lequel l'humidifiant non aqueux comprend du polyéthylèneglycol, un polypropylène glycoléther, un thioéther, un polyoxyalkylèneglycol, un dipropylèneglycol et/ou un polypropylèneglycol.

10. Le procédé selon l'une quelconque des revendications 1-8, dans lequel l'humidifiant non aqueux comprend un polyoxyalkylène glycol ou un polypropylène glycol.

11. Le procédé selon l'une quelconque des revendications 1-8, dans lequel l'humidifiant non aqueux comprend un composé polyhydroxy partiellement ou complètement estérifié à base de glycérine, du propylèneglycol, de l'éthylèneglycol, un acétate de glycérine, un sorbitol, un xylitol ou un maltitol.
